# EUROPEAN PATENT SPECIFICATION

(11) **EP 1 996 007 B1**
(45) Date of publication and mention of the grant of the patent: **11.05.2016**
(21) Application number: 07715850.9
(22) Date of filing: 05.03.2007
(51) Int. Cl.: A01D 45/00

(54) **DEVICE AND METHOD FOR HARVESTING CROP AND CROPHOLDER**
VORRICHTUNG UND VERFAHREN ZUM ERNTEN VON ERNTEGUT UND ERNTEGUTAUFNAHMEVORRICHTUNG
DISPOSITIF ET PROCÉDÉ POUR MOISSONNER UNE RÉCOLTE ET RELEVEUR DE RÉCOLTES

(30) Priority: 03.03.2006 NL 1031292
(43) Date of publication of application: 03.12.2008
(73) Proprietor: Van den Top, Hendrik, NL-3771 AH Barneveld (NL)
(72) Inventor: Van den Top, Hendrik, NL-3771 AH Barneveld (NL)
(74) Representative: Hogeweg, Albertus Johan
(86) International application number: PCT/NL2007/000057
(87) International publication number: WO 2007/100245

(56) References cited:
- EP-A1- 0 421 522
- WO-A-03/092354
- AU-B2- 646 568

## Description

The present invention relates to an apparatus and a method for facilitating the harvesting of crops.

It is known to harvest crops such as mushrooms from the substrate on which they are grown, for instance by means of manual cutting or picking thereof. In the case of picking a bottom part with soil and/or roots must then usually also be removed. According to the prior art, manual processing of many crops is essential in order to prevent damage to the product. Such damage decreases the value of the crop. In the case of mushrooms for instance brown stains occur on the surface if the surface is knocked or pushed. Such a harvesting process is time-consuming and labour-intensive, and therefore expensive.

WO 03/092354 discloses a device for conveying and cutting off picked mushrooms, comprising at least one cultivating device, where the mushrooms are cultivated and picked, the device being provided with a cutting device for cutting off the stems of the picked mushrooms, and the device being provided with a conveying system for conveying the picked mushrooms from the cultivating device to the cutting device, and said conveying system being equipped with two endless belts, the distance between the belts being adjustable depending on the thickness of the stem of the picked mushroom being placed between them.

Such device is directed at flexibility as to mushrooms of variable sizes such that even the smallest mushrooms with hoods generally the size of large mushrooms stems can be treated in one device. However, this device is not able to minimize harvesting movement of the harvesting persons as all mushrooms require to be brought towards the conveyor. Also the conveyor requires complex adjustments relating to the size of the mushrooms to be harvested.

In order to obviate this drawback to a significant extent and to accelerate harvesting, the present invention provides an apparatus for facilitating the harvesting of crops growing on a substrate comprising:
- a frame which can be arranged movably relative to the substrate,
- a harvesting conveyor which can be placed on the frame in a manner such that the harvesting conveyor can be brought substantially within reach of practically all crops on the substrate,
- crop receiving members which are arranged in the harvesting conveyor and which are suitable for simple manual placing of the crops therein, wherein the conveyor is adapted to discharge the crops from a location within reach of the harvesting location.

Such an apparatus according to the present invention has the advantage that the crops can be discharged in automatic manner from the picking location by means of the harvesting conveyor. Because the harvesting conveyor can be brought within reach of practically all crops on the substrate, it becomes possible to combine the automatic discharge with manual picking or cutting of the crops. Because the person carrying out the picking or cutting can place the crops within arm's reach onto the conveyor, harvesting can take place much more efficiently.

In a first preferred embodiment according to the present invention the frame with the harvesting conveyor comprises a substrate holder conveyor, or can be placed relative to a substrate holder conveyor for movable transport of the substrate relative to the harvesting conveyor, wherein the substrate is preferably movable relative to the underside of the harvesting conveyor. It is advantageously achieved by means of this displaceability that the conveyor can be guided along uprights of the substrate. An advantage hereof is that the apparatus can be applied in the case of a number of substrate beds placed one above another. A further advantage of this movable arrangement according to the present embodiment is that a coupling to a further conveyor, which will be described hereinbelow, can be realized in somewhat variable manner. Variations in distance between such a vertical conveyor and the substrate can be compensated here.

In a further preferred embodiment the harvesting conveyor is arranged movably on a vehicle such that it is rotatably and/or linearly displaceable relative to the vehicle. This vehicle is suitable for travel on edges of substrate beds, and this embodiment therefore has the advantage that harvesting can take place from such beds with use of the present invention.

In a further preferred embodiment the harvesting conveyor comprises at least one oblique side relative to the travel direction of the vehicle. Such an oblique side advantageously provides the desired property of bringing within reach practically all crops on the substrate. The mobility of the vehicle relative to the substrate further contributes hereto.

In a further preferred embodiment the apparatus comprises a transport conveyor for transporting the crops at least in downward and/or upward direction, wherein both conveyors can be arranged relative to each other such that the crops can be transported by means of a gradual movement between the harvesting conveyor and the transport conveyor. This embodiment has the advantage for instance that the crops can be further transported in automatic and undamaged manner from the harvesting conveyor. No manual operation is necessary here, whereby the harvesting process can be further performed in efficient manner.

The transport conveyor preferably further comprises gripping members for picking up the crops from the harvesting conveyor at each holding position of the transport conveyor. Such gripping members have the advantage that they can grip the crops while transport, and therefore harvesting, can continue uninterrupted where in the prior art pickers have often had to interrupt activities.

The device preferably also comprises a transfer unit for transferring the crops from the harvesting conveyor and/or the transport conveyor into a holder and/or a third conveyor. An advantage of such an embodiment is that the crops can be transferred in automatic manner so that the part of the harvesting process from placing in the harvesting conveyor up to and including placing in the holder, such as a (transport) packing, can be carried out wholly without human intervention. Significant savings are hereby made in labour costs during the harvesting process.

The movements of the conveyors and the transfer unit can preferably be synchronized and/or interrupted relative to each other. These aspects are particularly advantageous in providing the possibility to the pickers and/or harvesters of a relatively simple placing option, wherein the conveyor stands still briefly or at least slows down to some extent. A working rhythm can hereby also be provided to the people carrying out the picking and/or cutting operation. It is further possible to modify a rhythm to the work potential of these people by selecting a suitable speed and/or cycle time.

The apparatus preferably comprises removing means for removing undesired parts of the crop. Such removing means preferably comprise severing means. In the example of toadstools such as mushrooms the bottom part of the stalk can for instance be severed. Performing this severing in mechanical manner according to the present invention further achieves that severing is carried out in regular manner. An example hereof is a uniform stalk length which remains after severing on the underside of the cap of the mushroom. A further advantage is that severing takes place as far as possible at right angles to the stalk direction, whereby a high quality of the crop is perceived by the customers for the crop.

The coupling between the harvesting conveyor and transport conveyor can preferably be realized at different heights along a frame. It hereby becomes possible to utilize the conveyor on growth substrate beds which are transported one above another with a transport conveyor which has a height such that all growth substrate beds can be handled by means of such a transport conveyor.

For the purpose of transferring the crops between different conveyors and/or holders the transfer unit comprises a number of suction members for picking up crops by means of air pressure differences. It has been determined experimentally that such a method of picking up the crops prevents consequential damage to the crops during the period that the crops are, or are perceived to be, per se suitable for consumption.

The apparatus preferably further comprises a carrying vehicle for carrying at least the transport conveyor. By means of such a carrying vehicle it becomes possible to move the transport conveyor along the substrate beds. It hereby also becomes possible to move the vehicle with the harvesting conveyor. This preferably takes place at a speed such that there is just sufficient time for the persons carrying out the cutting and/or picking to place all products suitable for harvesting on the harvesting conveyor during the period of time that the harvesting conveyor is within reach of these crops suitable for harvesting. It hereby becomes possible in efficient manner according to the present invention to harvest all crops suitable for harvesting from a substrate.

For the transfer of the crops from conveyors the apparatus preferably comprises means for actuating the gradual movement after a predetermined transport distance of the harvesting conveyor or transport conveyor. This measure makes.it possible to displace a fixed number of crop receiving members of a conveyor relative to the subsequent conveyor, whereby it becomes possible in predetermined manner to empty all crop receiving members of a conveyor. An efficient filling of the final holder can be obtained by adapting this number to a suitable arrangement of crops in the final holder and/or a length or width dimension of the holder. This is further achieved by adapting the transfer member to place crops in a predetermined arrangement. The crops can hereby be ordered in mutually adjacent arrays in the holder by means of the transfer member covering a suitable path.

The drive of the different conveyors can be coupled in mechanical manner and in an electronically controllable manner. The movement of the different components can hereby be optimized in mutually adapted manner and with a view to the most efficient possible main process.

The apparatus preferably also comprises a supply and/or discharge unit for crop holders and/or a stacking unit for crop holders. It hereby becomes possible to fill transport holders in optionally continuous manner with the crops in co-action with the transfer member.

A further aspect according to the present invention relates to a method according to claim 12.

The crops are preferably transferred in undamaged manner from the harvesting conveyor to the transport conveyor. The crops will hereby not be damaged in visible manner, whereby no marks resulting from the harvesting will occur or become visible during the shelf-life of the product. The method preferably comprises steps for interrupting the movements of the conveyors in accordance with a predetermined pattern. It hereby becomes simpler for the people performing the picking or cutting operations of the harvesting according to the present invention to place the crops in the crop receiving members of the harvesting conveyor, thereby also preventing damage as stated in the foregoing.

Further advantages, features and details of the present invention will be described hereinbelow on the basis of different views of an embodiment with reference to the accompanying figures, in which:
- Fig. 1 is a perspective view of an embodiment according to the present invention;
- Fig. 2 is a further perspective view of this embodiment;
- Fig. 3 is a further perspective view of this embodiment in a further position of use;
- Fig. 4 is a perspective view of a detail of Fig. 2;
- Fig. 5 is a perspective view of a detail of Fig. 3;
- Fig. 6-8 show further perspective views of details of the embodiment;

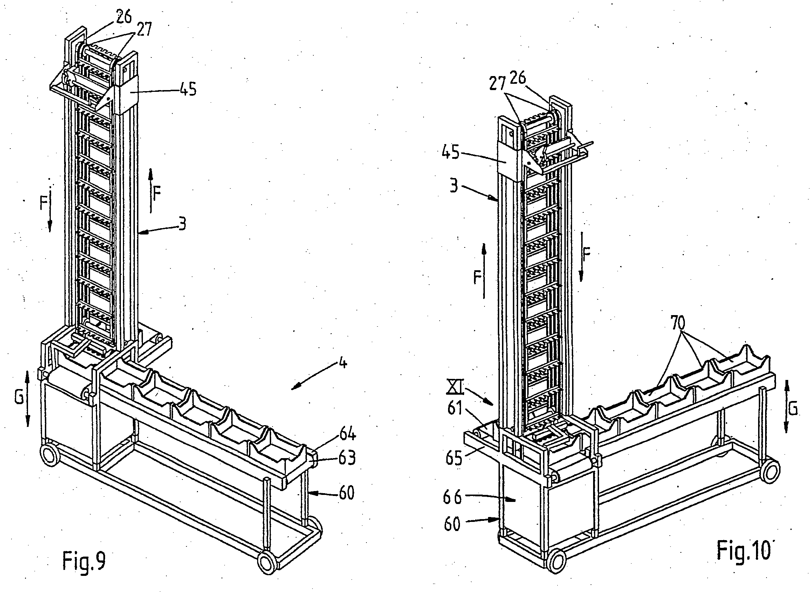

- Fig. 9-10 show further perspective views of the embodiment;
- Fig. 11 shows a further perspective view of a detail of Fig. 10;
- Fig. 12 is a cross-sectional side view of the embodiment;
- Fig. 13 is a top view of the embodiment;
- Fig. 14 is a perspective view of a further detail of the embodiment;

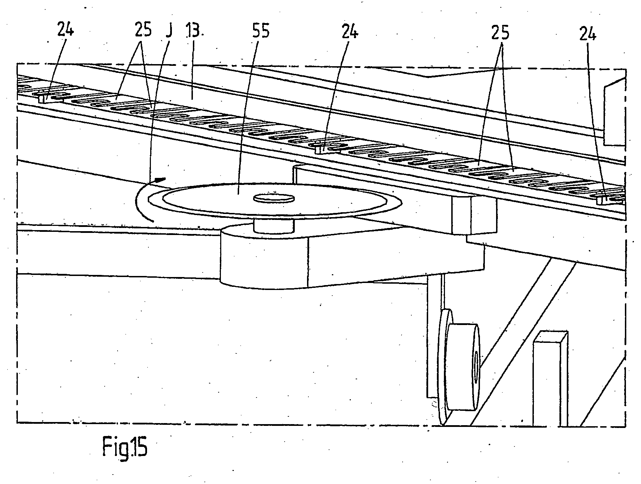

- Fig. 15 is a perspective view of a further detail of the embodiment;
- Fig. 16 is a perspective view of a further embodiment of a detail of the embodiment;
- Fig. 17 is a perspective view of a further embodiment of a detail of the embodiment;
- Fig. 18 is a schematic top view of a further preferred embodiment according to the present invention;

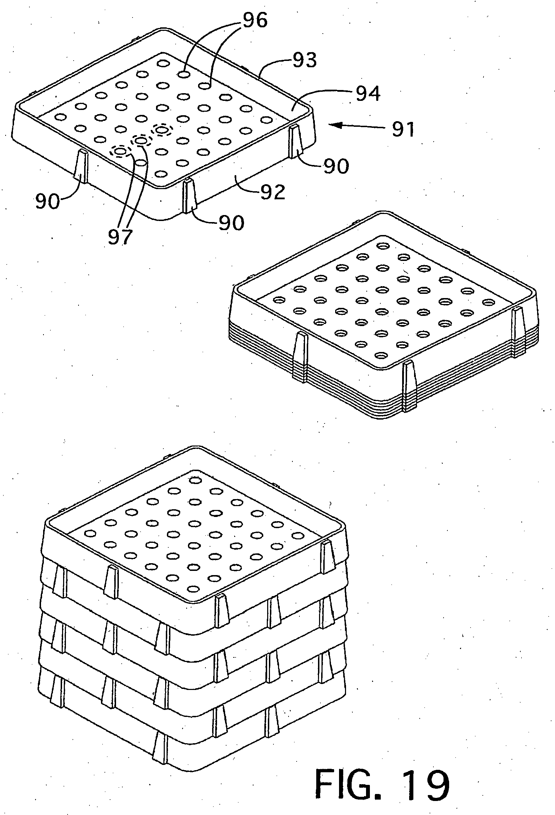

- Fig. 19 shows a number of perspective views of a further preferred embodiment according to the present invention.

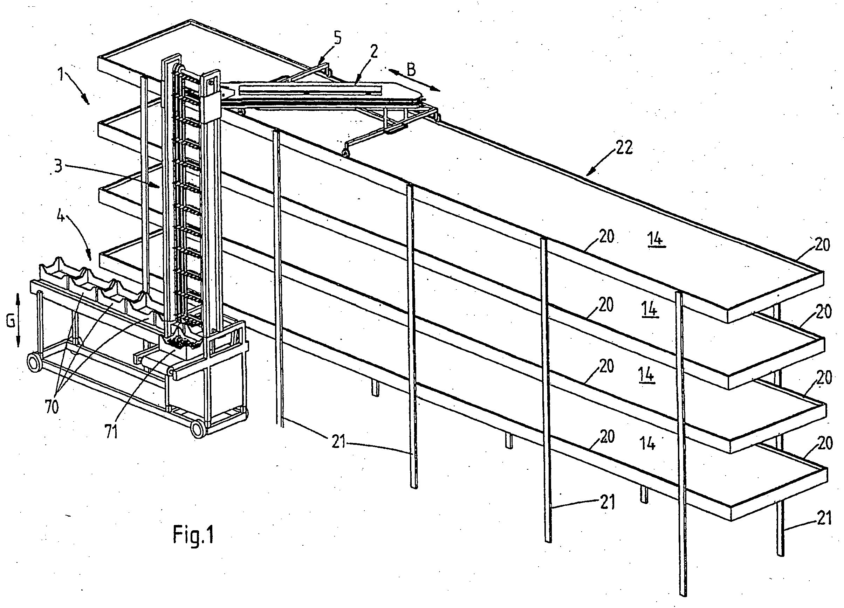

A preferred embodiment according to the present invention (Fig. 1) relates to an apparatus 1 for assisting in the harvesting of mushrooms. The apparatus comprises a number of sub-systems and is suitable for harvesting mushrooms cultured in growth substrate beds 14 which are arranged in stackable manner in a growth substrate bed rack 22. The growth substrate beds comprise in the lengthwise direction thereof edges over which wheels 8 of the harvest assisting apparatus can travel. The growth substrate bed rack 22 also comprises uprights 21 to which the growth substrate beds 14 are attached.

Apparatus 1 comprises a harvest assisting vehicle 5 on which a frame 2 is arranged in movable manner. Apparatus 1 further comprises a vertical conveyor unit 3 and a mobile frame 4 for mounting of the vertical conveyor 3 thereon.

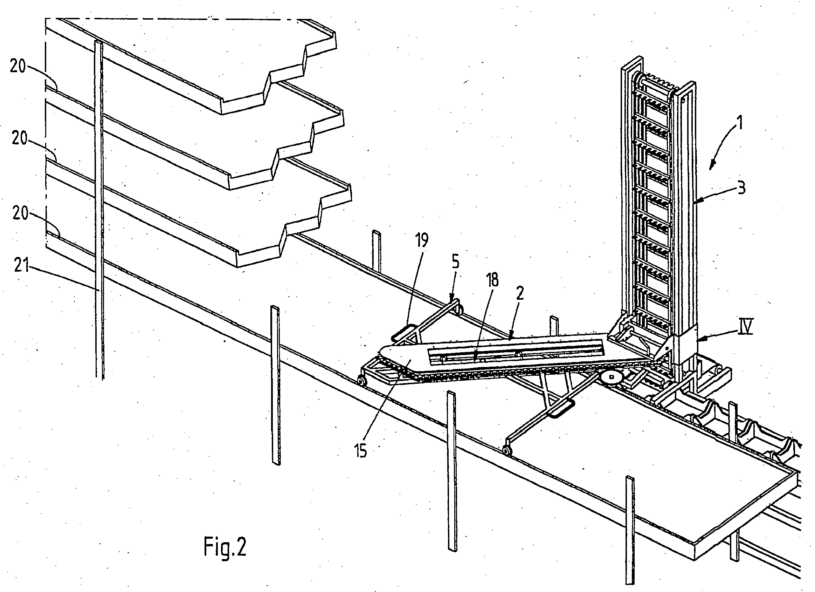

Vehicle 5 can travel by means of wheels 8 in the direction of arrow-B over the edges 20 of substrate 14. The whole length of the substrate can hereby be reached with this vehicle 5. The vehicle in particular is shown in greater detail in Fig. 2. The vehicle comprises a frame. The frame comprises two opposite frame beams 6,7 extending substantially between wheels 8. Both frame beams 6 and 7 are mutually connected by means of two longitudinal beams 9, 11 extending in the travel direction of the vehicle. From these longitudinal beams 9, 11 obliquely arranged support beams 10 extend on either side of the vehicle substantially to a position at the same width from the ends of frame beams 6,7. Frame beams 6 and 7 are further connected to the oblique support beams 10.

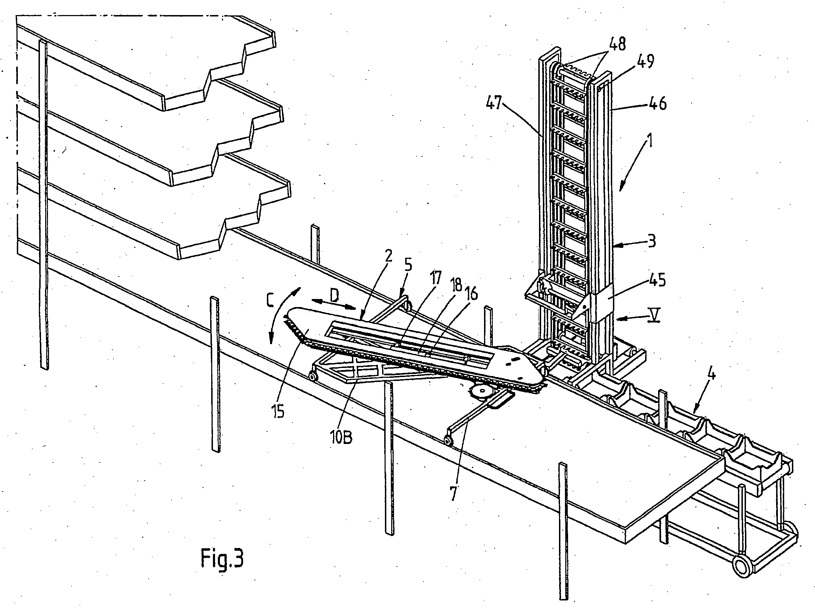

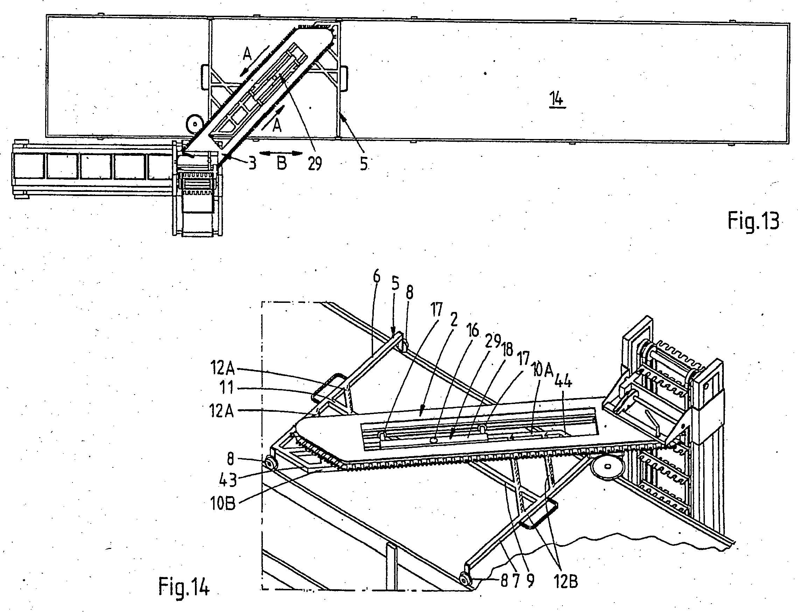

As shown in greater detail in Fig. 14 as well as in Fig. 2, a conveyor frame 2 is situated on vehicle frame 5. This conveyor frame 2 is arranged slidably and rotatably on vehicle frame 5. Conveyor frame 2 is hereby movable between a working position as shown in Fig. 2 and a rest position as shown for instance in Fig. 3. The importance of the rest position is that the conveyor is displaceable over the substrate between uprights 21.

For the purpose of realizing the mobility thereof, the frame is connected by means of a carriage 29 to the vehicle frame. A central beam 18 of carriage 29 is connected to the vehicle frame by means of a rotation shaft 16. A shaft with rollers 17 is arranged on either side of central beam 18 of the carriage. These rollers 17 can roll freely in a part of the conveyor frame 2 suitable for this purpose. Conveyor frame 2 is therefore slidable in the lengthwise direction in the direction of arrow D (Fig. 3), while also being rotatable about rotation shaft 16 in the directions of arrow C.

In order to bring about lighter movements of conveyor frame 2 over vehicle frame 5, vehicle frame 5 is provided on the top side with firm bristles 23. This also prevents wear from metal sliding on metal. Alternatively, this object can be achieved by means of applying for instance ball contacts. A further tested embodiment for rotating and supporting frame 2 comprises a rotary bearing, wherein the frame is only supported close to the centre by the rotary bearing.

The conveyor of transport frame 2 comprises a chain or belt 13 on which a plurality of mushroom carriers 25 are mounted. In the conveyor of this exemplary embodiment each seventh mushroom carrier comprises a protrusion 24 for actuating the slide 30 which will be discussed hereinbelow. For instance seven mushrooms at a time are hereby transferred from the conveyor of conveyor frame 2 to vertical conveyor 3.

When conveyor frame 2 is situated in the operating position (as shown in Fig. 1,2) two people can harvest mushrooms simultaneously using the apparatus. One person is located adjacently of vertical conveyor 3 and the other person is located on the other side of the substrate.

The free space between beams 6,11 and 10A and 7,9 and 10B respectively serves as picking space (Fig. 14). This free space co-displaces with the vehicle in the direction of arrow B. The whole substrate can in this way be covered, since the openings bounded by these beams extend at least as far as substantially the centre of the substrate as seen from the side edges.

According to the prior art a mushroom picker has to place the mushrooms in holders on the outer side of the substrate. This known method has the drawback that the pickers must make long movements with their hands during picking in order to set down one or several mushrooms at a time. Placing in this manner also often requires a torsional movement in the upper body of the picker. This torsional movement is time-consuming and taxing. In a method according to the present invention a picker only has to pick the mushroom from the substrate and place it by means of a short manual movement in one of the mushroom carriers 25 on the conveyor.

In order to simplify this operation the present invention makes provision that the conveyor, in addition to being driven by means of a continuous movement, can also be driven by means of an interrupted movement, whereby it becomes possible for the picker to be able to place the mushroom in the mushroom carrier during standstill of the conveyor.

The mushrooms are preferably picked wherein a stalk having thereon substrate residues of the growth substrate is left behind. Removal thereof by the picker would result in loss of time. In order to obviate such loss of time a rotation knife 55 is arranged close to a part of the conveyor toward which the filled mushroom carriers 25 move in the direction of arrow A before the mushrooms are transferred to the vertical conveyor. By means of this knife, which rotates in the direction of arrow J, the mushrooms can be severed at a predetermined distance relative to the cap. It is advantageous here that all mushrooms are severed to the same length and that they are all severed neatly and straight, which in manual cutting according to the prior art is not usually achieved. A manual cutting operation also slows down picking, and there is the risk of injury from the knife. Such drawbacks are likewise obviated by use of an apparatus and method according to the present invention.

The picking conveyor moves in the direction of arrow A. The two pickers together fill the mushroom carriers 25. The circulation speed of the conveyor is therefore preferably set such that the two can each fill roughly half the crop carriers. The mushrooms are transferred from the crop carries in the conveyor to vertical conveyor 3. The hereby emptied crop carriers move in interrupted manner in the direction of arrow A. The picker located adjacently of vertical transporter 3 is therefore the first to have the opportunity to fill some of the carriers with mushrooms, whereafter the other picker has this opportunity on the other side of the conveyor. Because the horizontal picking conveyor has to stop each time for transfer of mushrooms to the vertical conveyor, this stoppage time can be used by the pickers to place mushrooms which have just been picked into the crop carriers. No delay in transport hereby occurs for the purpose of placing the mushrooms in the mushroom carriers.

Vertical transporter 3 serves to transport in vertical direction mushrooms transferred from the harvesting conveyor. The vertical conveyor is provided for this purpose with carrier elements 31 which are mounted on a chain or belt 27 and which are each provided with a number of, in this example seven, mushroom holding recesses formed by protrusions 32. This chain with carrier elements is arranged on toothed wheels 48 arranged on a shaft 40 of elongate frame 46,47. A motor drive for the purpose of driving the chains is situated on the underside of this elongate frame.

A second pair of chains 26 guided over toothed wheels 48 are further situated inside elongate frame 46, 47. These outer chains 26 serve to drive the horizontal conveyor and other driven elements in conveyor frame 2, such as the knife and the slide. Alternatively, the different moving components in the embodiment according to the present invention can be driven separately or per group by means of a motor. In such an embodiment the chain 26 is replaced by for instance a motor or motors arranged on or in conveyor frame 2.

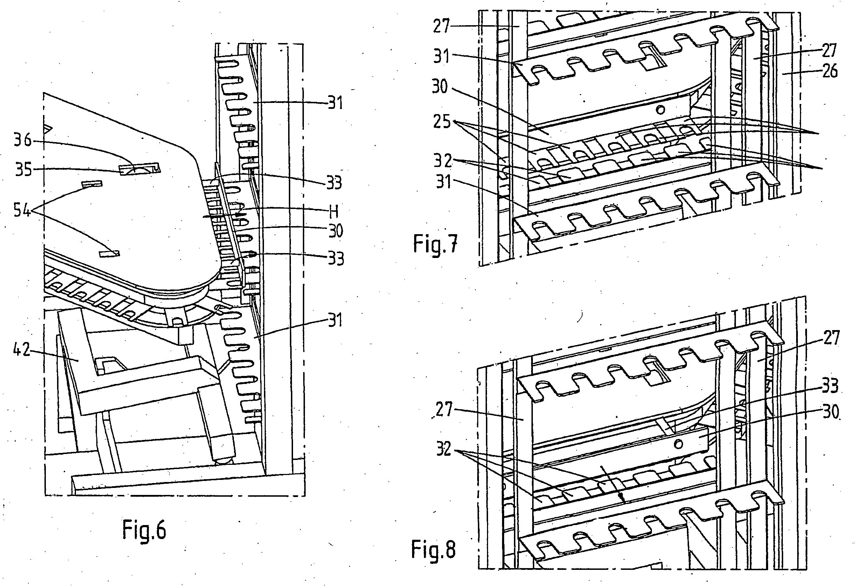

For transfer purposes the openings of carrier elements 31 of the vertical conveyor are brought to the same height as crop carriers 25 of the horizontal conveyor and both are brought to a stop. The mushrooms are subsequently displaced from their position in the horizontal conveyor to the new position in carrier elements 31 of the vertical conveyor by means of a slide 30 (Fig. 7,8) which is driven in the direction of arrow H (Fig. 6) by means of rods 33. In this embodiment slide 30 is driven by energy from chain 27 which is transmitted via the pivotable toothed wheel 39 via a mechanical coupling which actuates the slide movement synchronously with the movements of the conveyors. In an alternative, tested embodiment a separate electric motor can be arranged in frame 2.

Causing the two conveyors to stop at the correct position can be effected in mechanical and electronic manner. In-this embodiment the drives are coupled to each other in mechanical manner by means of the pairs of chains 26, 27 running synchronously with each other.

The vertical coupling of the two conveyors takes place by means of an adjustable coupling frame 45 which is displaceable along vertical frame 46,47 of the vertical conveyor in the directions of arrow F.

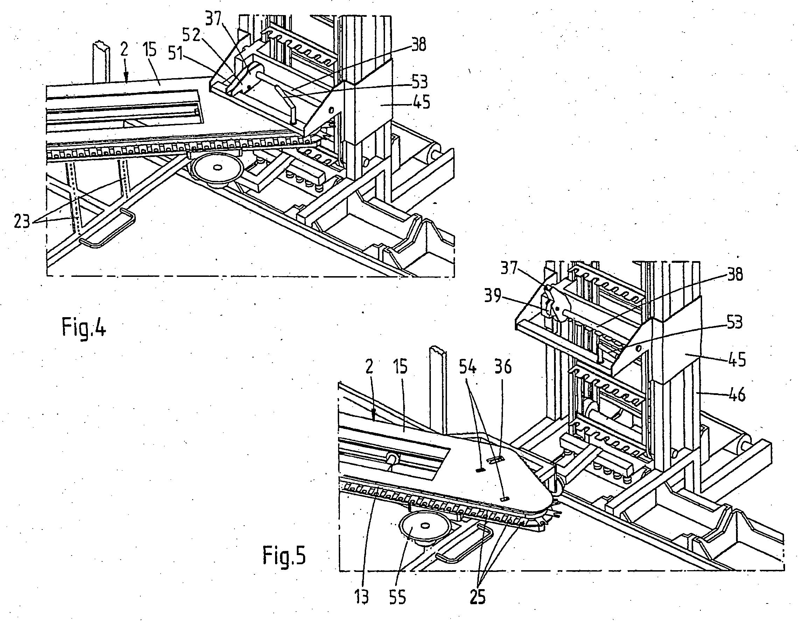

This coupling frame 45 serves for mounting of frame 2 of the horizontal conveyor on the vertical conveyor (Fig. 4,5). An upper plate 15 of frame 2 is provided with engaging openings 54 on which engage engaging means which are actuated by means of a handle 53 of frame 45. The coupled situation is shown in Fig. 4. For driving of the conveyor, the knife and the slide a mechanical coupling is further provided between chains 26 situated in the vertical conveyor and the horizontal conveyor. A toothed wheel 39, which is arranged in a frame 37 comprising side walls 51, 52 and which is connected in pivotable manner to shaft 38, is likewise coupled in drivable manner to chains 26.

Once the coupling between frame 45 and frame 2 has been effected in the above described manner, toothed wheel 39 is pivoted down into engagement with toothed wheel 36 through opening 35 of upper place 15 of conveyor frame 2 for the purpose of engaging in this toothed wheel 36 which is situated thereunder and which is mechanically connected to the conveyor, the slide and/or the knife. Such a mechanical coupling has the advantage that the driving and the speed of all components can be synchronized in mechanical manner.

In addition to this driving by means of mechanical couplings, it is equally possible to drive the different components separately by means of for instance individual electric motors, which the skilled person will be able to implement within the concept of the present invention. Stopping carrier elements 31 of the vertical conveyor at the correct height is realized by means of the actuators and/or sensors arranged in the vertically displaceable frame.

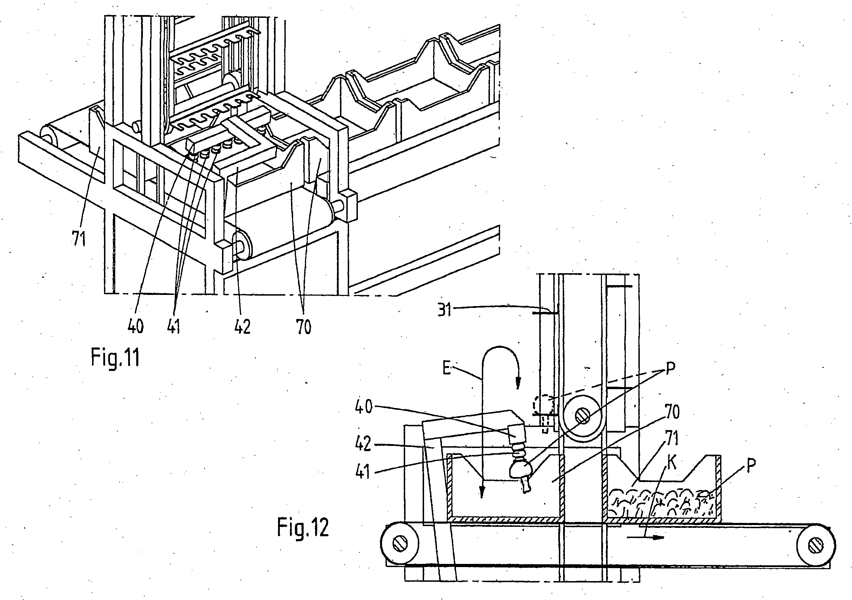

Arranged on the underside of the vertical conveyor is a transfer unit for transferring the mushrooms from carrier elements 31 to crates 70. Pick-up of the mushrooms from carrier elements 31 preferably takes place while the latter are standing still, this preferably taking place at the same standstill times as for placing of the mushrooms in the harvesting conveyor and the transfer of the mushrooms from the harvesting conveyor to the transport conveyor. The transfer member is shown in detail in Fig. 11 and in side view in Fig. 12.

The transfer unit comprises an arm 42 on which is mounted a transverse support arm comprising a number of rubber suction cups 41. Arm 42 and support arm 40 preferably take a hollow form so that air can be exhausted or blown in therethrough for the purpose of providing suction and/or a blowing pressure for picking up and releasing the mushrooms. It is otherwise also possible to provide each suction cup individually with a feed air hose. In order to obtain the underpressure or overpressure in the suction cup an alternating air pressure regulator is provided which makes use in alternating manner of suction or blow-out air of an air pump.

Tests have shown that picking up the vulnerable mushrooms in this way can be carefully performed such that the surface thereof suffers no visible damage during the freshness period thereof. The arm is moved by means of a suitable driving thereof such that it can approach the mushrooms in a carrier element 31 of the vertical conveyor from above, remove them and subsequently move them downward into the holder via a practical curve substantially in the directions of arrow E.

The downward movement is herein controlled such that a first row of mushrooms is placed along the wall of the holder and a second row of mushrooms against the first row, and so on until a layer has been set down in the holder. In alternative manner the arm movement during these cycles can remain the same and the holder or crate can be displaced in row width during the period of time that a following row of mushrooms is being collected by means of the transfer arm.

The whole unit of the conveyors and the transfer member must be moved along a substrate or a rack of substrate beds so as to enable harvesting along the whole length of the substrate beds. Said whole unit is placed for this purpose on a mobile frame 4. This frame 4 comprises a height-adjustable sub-frame 60 for height adjustment as according to arrow G. The frame further comprises a drive compartment 66 for accommodating the drive motor, the air suction motor and further control elements for the apparatus, such as for instance an electronic control and a control panel.

In a practical embodiment the mobile frame 4 is also provided with a height-adjustable platform (not shown) for carrying the picker on the relevant side of the substrate. Prior art support options can be provided for the picker on the other side of the substrate.

Provided for the supply of empty crates, discharge of full crates and the movement of crates which are being filled are a number of conveyors 61,64 which are arranged on a frame 64 of sub-frame 4. A stacking unit for stacking crates can be applied as required in order to further automate the process.

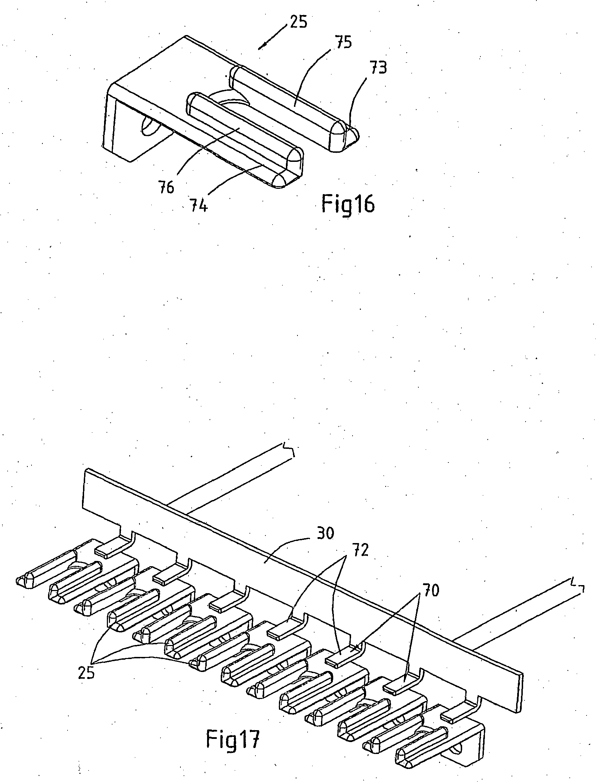

Figure 16 shows a further example of a mushroom carrier 25 for use on the horizontal conveyor. Situated on carrying arms 73,74 are respective elevations 75, 76 on which the underside of a cap of a mushroom can support. The purpose of these elevations lies in the fact that sliding of the mushrooms from the horizontal conveyor to the vertical conveyor can take place by pushing against the stalk instead of against the cap. This further reduces the chance of the valuable cap being damaged.

Figure 17 shows a slide 30 with associated mushroom carriers which matches the mushroom carrier of figure 16. In this embodiment slide 30 is provided with bent pusher members 70 which comprise a horizontal part 72 and which during sliding of the mushrooms are guided under the cap and then push against the stalk. This prevents slide 30 pushing in this embodiment against the cap of the mushroom or possible other crops for picking, thereby preventing irritation of the cap which can even be caused hereby and which can result in discoloration during the shelf-life period of the mushroom.

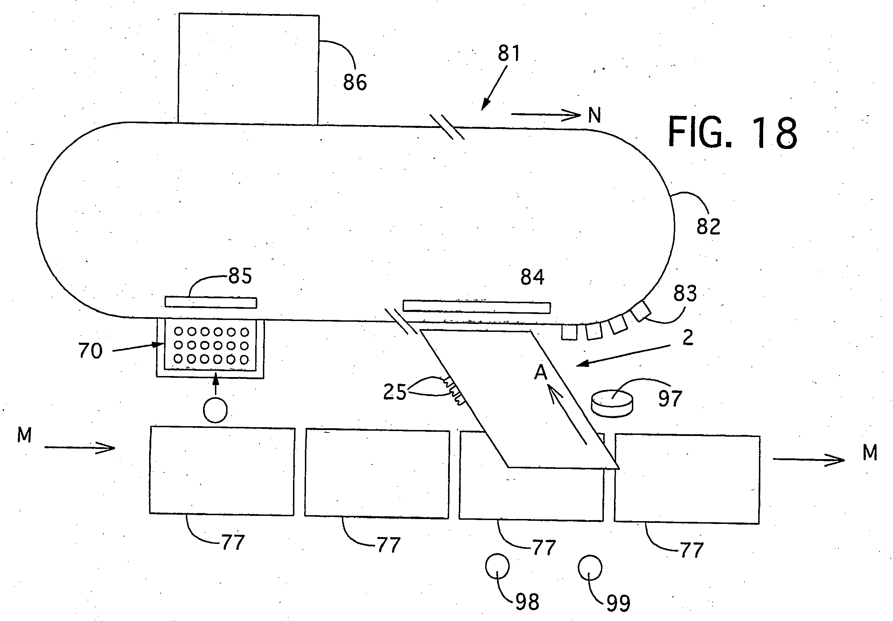

A further preferred embodiment is shown in figure 18. Using such a system it is possible in an efficient manner to harvest mushrooms growth in culture trays in which a substrate is arranged. For harvesting purposes the culture trays 77 are transported in the direction of arrows M by means of a culture tray conveyor. A harvesting conveyor 2 according to the present invention can be placed above the culture tray conveyor in a manner such that picking is possible from two sides of the culture tray conveyor. Figure 18 shows the situation wherein three pickers can work at the harvesting conveyor, i.e. an arrangement wherein the harvesting conveyor extends only partially over the culture tray. In this situation a picker can be positioned at position 97, from which position this picker can place the crops in the above described manner from the culture bed into mushroom carrier 25 of the harvesting conveyor. The same is the case for the pickers at positions 98 and 99, wherein the picker at position 98 will place mushrooms particularly in mushroom carriers 25 on the oblique side and the picker at position 99 will place the mushrooms mainly in the end side of the harvesting conveyor. It is however equally possible for the harvest conveyor to extend almost completely over the culture trays, in which case use can be made of the services of two pickers. In all cases the speed of the harvesting conveyor can be adapted to the harvesting speed of the pickers. The speed of the culture trays can also be adapted to the quantity of crops to be picked therefrom and the harvesting speed.

Further provided is a horizontal transport conveyor 81 for transferring the mushrooms from the harvesting conveyor to mushroom holders 70. In this embodiment a number of grippers 83 with the same mutual spacing as mushroom carriers 25 in the harvesting conveyor are transported in the transport conveyor by means of a chain. These grippers 83 are mounted on this chain. At the position of the harvesting conveyor the grippers must open by means of for instance engaging members pivoting open or sliding open (linearly). The grippers must release the mushrooms again at the location of the release position at mushroom holders 70. The grippers open transversely of the direction of transport of the two conveyors by means of an actuating mechanism 84 which is preferably embodied as cam guide. The grippers open under pressure from the cam guide before they reach the mushroom caps in mushroom carriers 25, and the grippers close as the grippers rise together with mushroom carriers 25. These grippers must then remain closed until, at the position of actuating unit 85 for release of the mushrooms, they are actuated for placing or dropping the respective mushroom at the correct position in a mushroom holder. For actuation of the gripper by means of actuating unit 85 the gripper is preferably provided with an actuating protrusion which contacts one of the arrays of displaceable actuating protrusions on actuating mechanism 85 as it passes along. The actuating mechanism is provided with an adjustable mechanism for successively or alternately holding a pin ready at the top for the purpose of actuating the actuating protrusion of the gripper at the correct position. This can of course be controlled in electronic manner.

The regulation of the speed between harvesting conveyor 25 and transport conveyor 81 can be brought about not only by means of a mechanical coupling but also by means of an electronic control. In a preferred embodiment both these conveyors are driven by means of a drive motor. An advantage of the embodiment of figure 16 is that the pickers can be in stationary position during the whole harvesting process. Increases in productivity of 100 to 400% have been achieved here as measured against the number of kilograms of product harvested. In such an embodiment with a horizontal discharge conveyor the end side of the harvesting conveyor is preferably slightly longer than in above described embodiments having for instance a vertical discharge conveyor. One reason for this is that the grippers must be given sufficient time to pick up the mushrooms from the mushroom carriers of the harvesting conveyor.

The grippers are preferably provided with contact cushions of a soft material, foaming plastics for instance being very suitable for this purpose. The cushions can preferably slide easily into the grippers for simple replacement thereof. Within the understanding of the present invention the skilled person can make a suitable choice hereof from many available types of material.

The length of the harvesting conveyor can be varied depending on the specific situation of use and extend for instance over a plurality of transport conveyors, or optionally even conveyors for discharging packing containers. It is for instance possible to apply a plurality of harvesting conveyors and a plurality of transport holders. It is further possible to perform measurements on the crops. Instead of the one conveyor for mushroom holders shown here, it is possible to arrange different conveyors under the transport conveyor so that different sizes of mushroom are placed in different holders. Release of the mushrooms into the correct holders takes place on the basis of information from an indicator which indicates how far apart the grippers are on the cap of the mushroom. Such an actuator is preferably a simple spacer which determines at which mushroom holder 70, i.e. at which size class, the gripper will open to drop the mushroom. In addition to a mechanical spacer, an electronic solution is also possible here within the understanding of the present invention. Particularly in an embodiment of a gripper which uses a sliding movement to open and close the gripper operation is simple with a mechanical actuator since this will be situated in a linear position which is defined in each case by the diameter of the mushroom.

A further embodiment not according to the present invention relates to a mushroom holder 91 which can also serve as retail package for a number of mushrooms. The package is preferably suitable for a number of mushrooms within a determined weight class or diameter class. The mushroom holder comprises a frame for the purpose of creating a determined height below and above a mushroom bottom having therein holes placed in a regular pattern. This regular pattern can be a regular grid or a grid offset per row. Depending on the embodiment, the frame comprises walls extending all-round or only supports at for instance the corner points of the holder. The embodiment has walls extending all-round. A top view and a grid cross-section are shown. The top view shows by means of the broken line 97 how, after placing thereof, the mushroom caps extend around openings 96. The side view also shows clearly how the holders can be stacked nestably due to the inclining "substantially vertical" walls. Through a suitable arrangement of recesses and protrusions 90 the mushroom holder can also be stacked when the mushrooms are located therein without them being touched by an underlying or overlying holder.

It is further possible for a second layer of mushrooms to be placed above the first layer when the stalks of the second layer are placed between the caps of the lower layer. A number that is one less than the underlying layer can hereby be placed in both directions of arrangement. Using a transfer unit or the transport conveyors as described in the foregoing the mushrooms can be placed automatically here in the holder from the harvesting process.

Different aspects of a preferred embodiment which can embody the present invention have been described in the foregoing on the basis of references to the figures. Within the understanding of the appended claims and this text the skilled person can modify many of these aspects within the scope of the invention. The rights sought are defined by the appended claims.

## Claims

1. Apparatus for facilitating the manual harvesting of crops growing on a substrate (14,77)), comprising:
- a frame (2) arrangeable movably relative to the substrate,
- a harvesting conveyor (13) that is place able on the frame in a manner such that the harvesting conveyor can be brought substantially within reach of practically all crops on the substrate,
- crop receiving members (25) which are arranged in the harvesting conveyor and which are suitable for simple manual placing of the crops therein, wherein the conveyor is adapted to transport the crops from a location within reach of the harvesting location, **characterized in that**:
- the harvesting conveyor (13) is substantially arrangeable over the substrate (14), and **in that**,
- the crop receiving members (25), when within reach, are within arm's reach of a person.

2. Apparatus as claimed in claim 1, wherein the frame (2) with the harvesting conveyor (13) is transportable relative to a substrate holder, or can be placed relative to a substrate holder conveyor for movable transport of the substrate relative to the harvesting conveyor, wherein the substrate (77) is preferably movable relative to the underside of the harvesting conveyor.

3. Apparatus as claimed in claim 1, wherein the frame (2) with the harvesting conveyor is arranged movably on a vehicle (5) such that it is rotatably and/or linearly displaceable relative to the vehicle.

4. Apparatus as claimed in one or more of the foregoing claims, wherein the harvesting conveyor comprises at least one oblique side relative to the direction of movement of the substrate (14,77) relative to the harvesting conveyor.

5. Apparatus as claimed in one or more of the foregoing claims, comprising a transport conveyor (3) for transporting the crops at least from the harvesting conveyor, wherein both conveyors can be arranged relative to each other such that the crops can be transported by means of a gradual movement between the harvesting conveyor and the transport conveyor.

6. Apparatus as claimed in one or more of the foregoing claims, wherein the transport conveyor comprises gripping members (31) for picking up the crops from the harvesting conveyor at each holding position of the transport conveyor.

7. Apparatus as claimed in one or more of the foregoing claims, wherein the speed and/or the pitch of the harvesting conveyor can be adjusted to each other.

8. Apparatus as claimed in one or more of the foregoing claims, comprising a transfer unit for transferring the crops from the harvesting conveyor and/or the transport conveyor into a holder and/or a third conveyor.

9. Apparatus as claimed in one or more of the foregoing claims, wherein the movements of the conveyors and the transfer unit can be synchronized relative to each other.

10. Apparatus as claimed in one or more of the foregoing claims, comprising drive means for interrupted driving of the conveyors.

11. Apparatus as claimed in one or more of the foregoing claims, comprising removing means for removing undesired parts of the crop.

12. Method for manually harvesting crops from a substrate (14) while making use of an apparatus as claimed in one or more of the foregoing claims, comprising steps for:
- manually separating at least a part of a crop from a substrate,
- manually placing the separated part of the crop in a harvesting conveyor (13), **characterized in that**:
- the harvesting conveyor is substantially arrange able over the substrate (14), and **in that**,
- the crop receiving members, when within reach, are within arm's reach of a person.

13. Method as claimed in claim 12, comprising steps for transferring the crop in undamaged manner from the harvesting conveyor to a transport conveyor.

14. Method as claimed in claim 12 or 13, comprising steps for removing at least an undesired part of the crop by means of removing means.

15. Method as claimed in one or more of the claims 12-14, wherein use is made of an apparatus according to one or more of the claims 1- 11.

## Patentansprüche

1. Eine Vorrichtung zum Erleichtern der manuellen Ernte von auf einem Substrat (14, 77) wachsenden Kulturpflanzen, beinhaltend:
- einen Rahmen (2), der relativ zu dem Substrat bewegbar angeordnet werden kann,
- ein Erntefördermittel (13), das so auf dem Rahmen platziert werden kann, dass das Erntefördermittel im Wesentlichen in greifbare Nähe praktisch aller Kulturpflanzen auf dem Substrat gebracht werden kann,
- Kulturpflanzenaufnahmeelemente (25), die in dem Erntefördermittel angeordnet sind und die zum einfachen manuellen Platzieren der Kulturpflanzen in diese geeignet sind, wobei das Fördermittel zum Transportieren der Kulturpflanzen von einer Stelle in greifbarer Nähe der Erntestelle angepasst ist, **dadurch gekennzeichnet, dass**:
- das Erntefördermittel (13) im Wesentlichen über dem Substrat (14) angeordnet werden kann und dass
- die Kulturpflanzenaufnahmeelemente (25), wenn in greifbarer Nähe, in Reichweite einer Person sind.

2. Vorrichtung gemäß Anspruch 1, wobei der Rahmen (2) mit dem Erntefördermittel (13) relativ zu einem Substrathalter transportierbar ist oder relativ zu einem Substrathalterfördermittel zum bewegbaren Transport des Substrats relativ zu dem Erntefördermittel platziert werden kann, wobei das Substrat (77) vorzugsweise relativ zu der Unterseite des Erntefördermittels bewegbar ist.

3. Vorrichtung gemäß Anspruch 1, wobei der Rahmen (2) mit dem Erntefördermittel auf einem Träger (5) bewegbar angeordnet ist, so dass er relativ zu dem Träger drehbar und/oder linear verschiebbar ist.

4. Vorrichtung gemäß einem oder mehreren der vorhergehenden Ansprüche, wobei das Erntefördermittel mindestens eine relativ zu der Richtung der Bewegung des Substrats (14, 77) relativ zu dem Erntefördermittel schräge Seite beinhaltet.

5. Vorrichtung gemäß einem oder mehreren der vorhergehenden Ansprüche, beinhaltend ein Transportfördermittel (3) zum Transportieren der Kulturpflanzen mindestens von dem Erntefördermittel, wobei beide Fördermittel relativ zueinander angeordnet werden können, so dass die Kulturpflanzen mittels einer schrittweisen Bewegung zwischen dem Erntefördermittel und dem Transportfördermittel transportiert werden können.

6. Vorrichtung gemäß einem oder mehreren der vorhergehenden Ansprüche, wobei das Transportfördermittel Greifelemente (31) zum Aufgreifen der Kulturpflanzen von dem Erntefördermittel an jeder Halteposition des Transportfördermittels beinhaltet.

7. Vorrichtung gemäß einem oder mehreren der vorhergehenden Ansprüche, wobei die Geschwindigkeit und/oder der Neigungswinkel des Erntefördermittels aneinander angepasst werden können.

8. Vorrichtung gemäß einem oder mehreren der vorhergehenden Ansprüche, beinhaltend eine Transfereinheit zum Transferieren der Kulturpflanzen von dem Erntefördermittel und/oder Transportfördermittel in einen Halter und/oder ein drittes Fördermittel.

9. Vorrichtung gemäß einem oder mehreren der vorhergehenden Ansprüche, wobei die Bewegungen der Fördermittel und der Transfereinheit relativ zueinander synchronisiert werden können.

10. Vorrichtung gemäß einem oder mehreren der vorhergehenden Ansprüche, beinhaltend Antriebsmittel zum ununterbrochenen Antrieb der Fördermittel.

11. Vorrichtung gemäß einem oder mehreren der vorhergehenden Ansprüche, beinhaltend Entfernungsmittel zum Entfernen unerwünschter Teile der Kulturpflanze.

12. Ein Verfahren zum manuellen Ernten von Kulturpflanzen von einem Substrat (14) während der Verwendung einer Vorrichtung gemäß einem oder mehreren der vorhergehenden Ansprüche, beinhaltend die folgenden Schritte:
- manuelles Trennen mindestens eines Teils einer Kulturpflanze von einem Substrat,
- manuelles Platzieren des abgetrennten Teils der Kulturpflanze in ein Erntefördermittel (13), **dadurch gekennzeichnet, dass**:
- das Erntefördermittel im Wesentlichen über dem Substrat (14) angeordnet werden kann und dass
- die Kulturpflanzenaufnahmeelemente, wenn in greifbarer Nähe, in Reichweite einer Person sind.

13. Verfahren gemäß Anspruch 12, beinhaltend die Schritte des Transferierens der Kulturpflanze auf unbeschädigte Weise von dem Erntefördermittel auf ein Transportfördermittel.

14. Verfahren gemäß Anspruch 12 oder 13, beinhaltend die Schritte des Entfernens mindestens eines unerwünschten Teils der Kulturpflanze mittels eines Entfernungsmittels.

15. Verfahren gemäß einem oder mehreren der Ansprüche 12-14, wobei eine Vorrichtung gemäß einem oder mehreren der Ansprüche 1-11 verwendet wird.

## Revendications

1. Dispositif pour faciliter la récolte manuelle de produits cultivés poussant sur un substrat (14, 77), comportant :
- un cadre (2) conçu pour être mobile par rapport au substrat,
- un tapis de récolte (13) apte à être placé sur le cadre de telle sorte que le tapis de récolte puisse être mis sensiblement à portée de pratiquement tous les produits sur le substrat,
- des éléments de réception (25) de produits récoltés, qui sont installés dans le tapis de récolte et qui permettent simplement d'y déposer manuellement les produits récoltés, le tapis étant destiné à transporter les produits récoltés depuis un lieu à portée du lieu de récolte, **caractérisé en ce que** :
- le tapis de récolte (13) peut être disposé sensiblement au-dessus du substrat (14), et **en ce que**
- les éléments de réception (25) de produits récoltés, lorsqu'ils sont à portée, sont à portée de main d'une personne.

2. Dispositif selon la revendication 1, dans lequel le cadre (2) avec le tapis de récolte (13) est déplaçable par rapport à un support de substrat ou peut être placé, par rapport à un convoyeur de support de substrat, pour le transport du substrat par déplacement par rapport au tapis de récolte, le substrat (77) étant de préférence mobile par rapport à la face inférieure du tapis de récolte.

3. Dispositif selon la revendication 1, dans lequel le cadre (2) avec le tapis de récolte est installé de manière mobile sur un véhicule (5) de façon à pouvoir se déplacer d'une manière rotative ou linéaire par rapport au véhicule.

4. Dispositif selon une ou plusieurs des revendications précédentes, dans lequel le tapis de récolte comprend au moins un côté oblique par rapport à la direction de déplacement du substrat (14, 77) par rapport au tapis de récolte.

5. Dispositif selon une ou plusieurs des revendications précédentes, comportant un tapis de transport (3) pour transporter les produits récoltés au moins depuis le tapis de récolte, les deux tapis pouvant être disposés l'un par rapport à l'autre de façon que les produits récoltés puissent être transportés grâce à un déplacement progressif entre le tapis de récolte et le tapis de transport.

6. Dispositif selon une ou plusieurs des revendications précédentes, dans lequel le tapis de transport comprend, à chaque emplacement de regroupement sur le tapis de transport, des éléments de saisie (31) pour prélever sur le tapis de récolte les produits récoltés.

7. Dispositif selon une ou plusieurs des revendications précédentes, dans lequel la vitesse et l'écartement du tapis de récolte sont réglables individuellement et/ou l'un par rapport à l'autre.

8. Dispositif selon une ou plusieurs des revendications précédentes, comportant un système de transfert pour transférer les produits récoltés du tapis de récolte et/ou du tapis de transport jusque dans un conteneur et/ou sur un troisième tapis.

9. Dispositif selon une ou plusieurs des revendications précédentes, dans lequel les mouvements des tapis et du système de transfert peuvent être synchronisés les uns par rapport aux autres.

10. Dispositif selon une ou plusieurs des revendications précédentes, comportant des moyens d'entraînement pour l'entraînement discontinu des tapis.

11. Dispositif selon une ou plusieurs des revendications précédentes, comportant des moyens de suppression pour supprimer des parties indésirables des produits récoltés.

12. Procédé pour récolter manuellement, à l'aide d'un dispositif selon une ou plusieurs des revendications précédentes, des produits cultivés sur un substrat (14), le procédé comportant des étapes pour :
- séparer manuellement d'un substrat au moins une partie des produits cultivés,
- placer manuellement sur un tapis de récolte (13) la partie des produits cultivés séparée, **caractérisé en ce que** :
- le tapis de récolte peut être disposé sensiblement au-dessus du substrat (14), et **en ce que**
- les éléments de réception de produits récoltés, lorsqu'ils sont à portée, sont à portée de main d'une personne.

13. Procédé selon la revendication 12, comportant des étapes pour transférer les produits récoltés du tapis de récolte à un tapis de transport sans les endommager.

14. Procédé selon la revendication 12 ou 13, comportant des étapes pour supprimer, à l'aide de moyens de suppression, au moins une partie indésirable des produits récoltés.

15. Procédé selon une ou plusieurs des revendications 12 à 14, dans lequel est utilisé un dispositif selon une ou plusieurs des revendications 1 à 11.
